# EUROPÄISCHE PATENTANMELDUNG

(11) **EP 3 151 472 A1**
(43) Veröffentlichungstag der Anmeldung: **05.04.2017**
(21) Anmeldenummer: 15187314.8
(22) Anmeldetag: 29.09.2015
(51) Int. Cl.: H04L 12/40, G06F 13/38, G06F 13/40, H04L 12/815

(54) **KOMMUNIKATIONSEINRICHTUNG ZUM ANSCHLUSS AN EIN KOMMUNIKATIONSNETZ**

(71) Anmelder: Siemens Aktiengesellschaft, 80333 München (DE)
(72) Erfinder: Albrecht, Harald, 90475 Nürnberg (DE); Biehler, Georg, 90453 Nürnberg (DE)

(57) **Zusammenfassung**

Die vorliegende Erfindung beschreibt eine Kommunikationseinrichtung (130) zum Anschluss an ein Kommunikationsnetz (101, 102) und zur Übertragung von Daten über das Kommunikationsnetz (101, 102) mit
- einer Erkennungs-Einrichtung (144, 145) zur Erkennung mindestens eines Automatisierungsnetz-Typs, und
- einem Datenausgabe-Modulationseinrichtung (141) zur Beeinflussung der Datenrate von von der Kommunikationseinrichtung (130) ausgegebenen Daten,

wobei die Kommunikationseinrichtung (130) derart ausgebildet und eingerichtet ist,
- dass die Ausgabe von Daten durch die Kommunikationseinrichtung (130) an ein angeschlossenes Kommunikationsnetz (102) mittels eines ersten Modus der Datenausgabe-Modulationseinrichtung (141) erfolgt, wenn von der Erkennungs-Einrichtung (144, 145) eine Kommunikation gemäß dem mindestens einen Automatisierungsnetz-Typ erkannt wird, und
- dass ansonsten die die Ausgabe von Daten an das angeschlossene Kommunikationsnetz (102) mittels mindestens eines weiteren Modus der Datenausgabe-Modulationseinrichtung (141) erfolgt.

## Beschreibung

Die Erfindung betrifft eine Kommunikationseinrichtung zum Anschluss an ein Kommunikationsnetz und zur Übertragung von Daten über das Kommunikationsnetz. Dabei ist die Kommunikationseinrichtung auch für den Anschluss an ein als Automatisierungsnetz ausgebildetes Kommunikationsnetz vorgesehen, wobei weiterhin im Automatisierungsnetz sowohl eine Echtzeit-Datenübertragung, als auch eine Übertragung weniger zeitkritischer Daten erfolgen kann.

Eine derartige Kommunikationseinrichtung ist aus dem Stand der Technik bekannt. So offenbart beispielsweise der Artikel *"*QoS in Switched Industrial Ethernet", Thrybom, L et al., IEEE Conference on the Emerging Technologies and Factory Automation, 2009, Piscataway, NY, USA, 22. September 2009, Seiten 1 bis 8, ein Verfahren zur Datenübertragung in Automatisierungsnetzen, wobei sowohl Echtzeit-Steuerdaten, als auch weniger zeitkritische Daten im gleichen Netz übertragen werden. Dabei wird ein Verfahren offenbart, wie bei einer derartigen Misch-Datenübertragung über die Vergabe von Prioritäten auch bei wechselnder Daten-Belastung ein ordnungsgemäß funktionierender Echtzeitdaten-Betrieb ermöglicht wird.

Es ist ein Nachteil des Standes der Technik, dass beispielsweise bei neu an ein solches Netz angeschlossenen Geräten eine entsprechende Priorisierung vorgesehen sein muss, damit sich das neue Gerät in das Automatisierungsnetz einfügen kann ohne die gemischte Echtzeit-normale Datenübertragung entscheidend zu stören.

Daher ist es eine Aufgabe der vorliegenden Erfindung, eine Kommunikationseinrichtung zur Verfügung zu stellen, welche auf vereinfachte Weise an ein Automatisierungsnetz anschließbar ist.

Diese Aufgabe wird gelöst von einer Kommunikationseinrichtung mit den Merkmalen des Patentanspruchs 1.

Eine solche Kommunikationseinrichtung ist zum Anschluss an ein Kommunikationsnetz und zur Übertragung von Daten über das Kommunikationsnetz ausgebildet und eingerichtet. Dabei umfasst die Kommunikationseinrichtung eine Erkennungs-Einrichtung zur Erkennung mindestens eines Automatisierungsnetz-Typs, und eine Datenausgabe-Modulationseinrichtung zur Beeinflussung der Datenrate von von der Kommunikationseinrichtung ausgegebenen Daten. Dabei ist die Kommunikationseinrichtung derart ausgebildet und eingerichtet, dass die Ausgabe von Daten durch die Kommunikationseinrichtung an ein angeschlossenen Kommunikationsnetz mittels eines ersten Modus der Datenausgabe-Modulationseinrichtung erfolgt, wenn von der Erkennungs-Einrichtung eine Kommunikation gemäß dem mindestens einen Automatisierungsnetz-Typ in dem angeschlossenen Kommunikationsnetz erkannt wird, und dass ansonsten die Ausgabe von Daten an das angeschlossene Kommunikationsnetz mittels mindestens eines weiteren Modus der Datenausgabe-Modulationseinrichtung erfolgt.

Durch die Erkennungs-Einrichtung ist es der Kommunikationseinrichtung möglich, durch die Überprüfung auf den mindestens einen Automatisierungsnetz-Typ zu erkennen, ob das Kommunikationsnetz z.B. zur Übertragung von Echtzeit-Daten vorgesehen und eingerichtet ist und, wenn ja, ob und/oder wie eine parallele Kommunikation von Echtzeit- und Nicht-Echtzeit-Daten dabei vorgesehen ist. Somit ist es einer solchen Kommunikationseinrichtung möglich, die Datenausgabe in das angeschlossene Automatisierungs-Netz daran angepasst vorzunehmen. Wird beispielsweise in einem anderen Fall kein Automatisierungsnetz oder kein bestimmtes, vorgegebenes Automatisierungsnetz erkannt, kann die Ausgabe der Kommunikationseinrichtung an das angeschlossene Kommunikationsnetz auch an ein solches Netz angepasst werden, indem beispielsweise dann eine unmodulierte oder unveränderte Datenausgabe erfolgt.

Dadurch wird der Anschluss einer derartigen Kommunikationseinrichtung an ein entsprechendes Automatisierungsnetz einfacher ermöglicht, da über die Erkennungs-Einrichtung zumindest teilweise die Ankopplung an ein solches Netz ohne entsprechende manuelle Voreinstellungen erfolgen kann und die Netz-Performance des Automatisierungsnetzes insbesondere in Bezug auf die Echtzeit-Datenübertragung dabei zumindest im wesentlichen erhalten bleibt.

Die Kommunikationseinrichtung kann beispielsweise ein Computer, eine Steuerungs- oder Automatisierungseinrichtung, ein Steuerungsmodul, eine Speicherprogrammierbare Steuerung, ein Schnittstellenmodul für eine Speicherprogrammierbare Steuerung oder jegliche Art von Datenverarbeitungseinrichtung, Kommunikationseinrichtung oder auch Netzwerkmodul oder -Stack sein, welcher zum Anschluss an ein Kommunikationsnetz ausgebildet und einrichtet ist.

Das Kommunikationsnetz kann jede Art von drahtgebundenem oder drahtlosem Netzwerk sein, welches zur Daten-, Informations-, und/oder Sprach-Kommunikation ausgebildet und eingerichtet ist. Beispielsweise kann ein Kommunikationsnetz als Ethernet-Netz, als Automatisierungsnetz, als Office-Netzwerk, als Feldbus, als Internet, als WLAN-Netzwerk, als Mobilfunk-Netzwerk oder Ähnlichem ausgebildet und eingerichtet sein.

Das Automatisierungsnetz kann beispielsweise zur Übertragung sowohl von Echtzeitdaten als auch von niedriger-prioreren, weniger zeitkritischeren und/oder zeitunkritischen Daten ausgebildet und eingerichtet sein. Dabei wird unter einer Echtzeitdaten-Übertragung eine Datenübertragung verstanden, bei welcher gewisse Antwort- und/oder Übertragungszeiten garantiert beziehungsweise eingehalten werden müssen.

Das Automatisierungsnetz kann beispielsweise gemäß einem Feldbus-Standard oder einem Industriellen-KommunikationsStandard ausgebildet und eingerichtet sein. So kann das Automatisierungsnetz beispielsweise als Profinet, Profibus, Modbus, Industrial Ethernet, EtherCAT, Interbus, DeviceNet, ControlNet, HART, Ethernet/IP, Ethernet Powerlink, Circos III, Varan, Safety NET oder ähnliche Kommunikationsnetze oder gemäß ähnlichen Kommunikationsstandards ausgebildet und eingerichtet sein.

Der Automatisierungsnetz-Typ kann beispielsweise der Feldbus- oder der entsprechende Kommunikationsstandard des jeweiligen Automatisierungsnetzes entsprechen. Beispielsweise kann der Automatisierungsnetz-Typ der Feldbustyp gegebenenfalls inklusive einer entsprechenden Modifikationen oder Erweiterungen sein. Solche Erweiterungen können beispielsweise Zusatz-Standards für dezentrale Peripheriesysteme, für isochrone Echtzeitkommunikation (Isochronous Real Time (IRT)) und/oder für Komponenten basierte Kommunikation sein. So kann beispielswese ein Feldbustyp z.B. als Profinet IO, Profinet CBA, Profibus DP, Profibus PA, Profinet inklusive installierter isochroner Echtzeit (Profinet plus IRT) oder Profinet ohne installierter Echtzeitkommunikation (Profinet ohne IRT) oder ähnliche Kommunikationssysteme ausgestaltet sein.

Die Datenausgabe-Modulationseinrichtung kann dazu ausgebildet und eingerichtet sein, die Datenrate des ausgehenden Datenstroms zu beeinflussen. Dies kann beispielsweise dadurch geschehen, dass die Datenrate für von der Kommunikationseinrichtung an ein Kommunikationsnetz ausgegebene Daten auf eine vorgegebene oder vorgebbare Datenausgaberate reduziert wird. Diese Reduktion kann beispielsweise eine zeitabhängige oder auch zeitunabhängige Reduktion sein. Die Datenausgabe-Modulationseinrichtung kann beispielsweise als ein so genannter "Traffic Shaper" oder eine so genannte "Sendedrossel" ausgebildet und eingerichtet sein.

Weiterhin kann die Datenausgabe-Modulationseinrichtung eine Speichereinrichtung zur Speicherung auszugebender Daten umfassen. Vermittels einer solchen Speichereinrichtung kann die Datenausgabe-Modulationseinrichtung auszugebende Daten beispielsweise zwischenspeichern, um eine vorgegebene Zeit abhängige oder Zeit unabhängige Datenrate bei der Ausgabe dieser Daten zu erreichen.

Die auszugebende zeitabhängige oder zeitunabhängige Datenrate kann beispielsweise fest vorgegeben sein oder manuell oder auch automatisch vorgebbar oder vorgegeben sein. Dabei kann weiterhin z.B. eine automatische Ermittlung einer vorgesehenen Ziel-Datenausgaberate beispielsweise von der Kommunikationseinrichtung selbst oder auch einer gesonderten Einrichtung Fall spezifisch und gegebenenfalls auch kontinuierlich ermittelt werden.

Der erste Modus der Datenausgabe-Modulationseinrichtung kann dabei derart eingerichtet sein, dass im ersten Modus der Datenausgabe-Modulationseinrichtung eine Ausgabe-Datenrate und/oder eine maximal mögliche Ausgabe-Datenrate vorliegt, die gegenüber einer unbeeinflussten und/oder ungedrosselten Ausgabe der Daten durch die Kommunikationseinrichtung reduziert ist.

Dabei kann die reduzierte Datenausgaberate und/oder die reduzierte maximal mögliche Datenausgaberate im ersten Modus der Datenausgabe-Modulationseinrichtung derart gewählt sein, dass beim vorliegenden Automatisierungsnetz-Typ des angeschlossenen Kommunikationsnetzes auch während einer Ausgabe von Daten durch die Kommunikationseinrichtung eine eventuell im Kommunikationsnetz ablaufende Echtzeit-Datenkommunikation ungestört und/oder ohne wesentliche Störungen weiter ablaufen kann bzw. abläuft.

Die Erkennungs-Einrichtung kann beispielsweise den mindestens einen Automatisierungsnetz-Typen erkennen, für welchen der erste Modus der Datenausgabe-Modulationseinrichtung die auszugebenden Daten von der Kommunikationseinrichtung entsprechend drosseln muss. Ein solcher Automatisierungsnetz-Typ kann beispielsweise ein Automatisierungsnetz oder ein Feldbus ohne projektierte Echtzeitkommunikation sein, wie beispielsweise ein Feldbus ohne IRT-Option (z.B. Profinet ohne IRT). In diesem Fall wird beispielsweise die Aufteilung der Echtzeit- und Nicht-Echtzeit-Kommunikation von der Verbindungssteuerung übernommen. Eine plötzliche Datenausgabe der Kommunikationseinrichtung von einer größeren Datenmenge kann dann zu einer Störung der Echtzeit-Datenübertragung führen. Durch beispielsweise eine Reduktion der Datenausgaberate im ersten Modus der Datenausgabe-Modulationseinrichtung kann die Ausgaberate bzw. die maximal mögliche Ausgaberate der von der Kommunikationseinrichtung ausgebebenen Daten so weit gedrosselt werden, dass keine Störung der Echtzeitdaten-Übertragung im angeschlossenen Kommunikationsnetz stattfindet.

Der mindestens eine weitere Modus der Datenausgabe-Modulationseinrichtung kann einen unbeeinflussten und/oder ungedrosselten Modus der Datenausgabe-Modulationseinrichtung umfassen, bei welchem die Datenausgabe-Modulationseinrichtung z.B. keinen Einfluss auf die vom Kommunikationsnetz ausgegebenen Daten nimmt.

Dieser ungedrosselte Modus der Datenausgabe-Modulationseinrichtung kann beispielsweise verwendet werden, wenn die Kommunikationseinrichtung an einem "normalen" (nicht-Automatisierungs-)Kommunikationsnetz, z.B. einem so genannten "Office-Net" oder dem Internet, angeschlossen ist.

In einer vorteilhaften Ausgestaltung kann die Erkennungs-Einrichtung zur Erkennung und/oder Analyse von über das angeschlossene Kommunikationsnetz kommunizierten Kommunikationsnachrichten ausgebildet und eingerichtet sein.

So kann die Erkennungs-Einrichtung beispielsweise den auf dem angeschlossenen Kommunikationsnetz ablaufenden Datenverkehr mithören und anhand eines oder mehrerer für einen bestimmten Automatisierungsnetz-Typ charakteristischen Nachrichtentypes oder Nachrichtenformates diesen Automatisierungsnetz-Typ erkennen.

Beispielsweise kann die Erkennungseinrichtung auch vom Kommunikationsnetz empfangene Nachrichten oder Datenpakete analysieren und anhand deren Inhalt feststellen, ob der mindestens eine Automatisierungsnetz-Typ im Kommunikationsnetz implementiert ist oder nicht. Solche Nachrichten können beispielsweise Identifikations- oder Erkennungsnachrichten sein, welche innerhalb bestimmter Kommunikationsprotokolle eingesetzt werden, beispielsweise zur Erkennung angeschlossener Geräte, deren Eigenschaften und Fähigkeiten und/oder Ähnlichem. Beispielsweise können solche Nachrichten so genannte LLDP-Nachrichten sein (LLDP = Link Layer Discovery Protocol). Anhand derartiger Nachrichten kann die Erkennungs-Einrichtung beispielsweise erkennen, ob der mindestens eine Automatisierungsnetz-Typ im Kommunikationsnetz implementiert ist.

Auf diese Weise kann die Datenausgabe von Daten einer Kommunikationseinrichtung an ein Kommunikationsnetz weiter vereinfacht werden, da durch die Analyse der empfangenen Nachrichten oder Datenpakete, Typ-mäßig und/oder inhaltlich, festgestellt werden, welche Kommunikations-Modi im Netz vorgesehen sind. Auf diese Weise kann dann die Datenausgabe der Kommunikationseinrichtung entsprechend angepasst werden, damit z.B. die bestehende Kommunikation nicht wesentlich gestört wird.

Weiterhin kann vorgesehen sein, dass im ersten Modus der Datenausgabe-Modulationseinrichtung eine Ausgaberate von an das angeschlossene Kommunikationsnetz ausgegebene Daten vorgesehen ist, welche gegenüber mindestens einer weiteren Ausgaberate des mindestens einen weiteren Modus der Datenausgabe-Modulationseinrichtung reduziert ist.

Es kann auch vorgesehen sein, dass die maximale Ausgaberate der Kommunikationseinrichtung im ersten Modus der Datenausgabe-Modulationseinrichtung gegenüber der maximalen Ausgaberate in mindestens einem weiteren Modus der Datenausgabe-Modulationseinrichtung reduziert ist. So kann beispielsweise die maximal mögliche Ausgaberate im ersten Modus geringer als die maximal mögliche Ausgaberate bei einer von der Datenausgabe-Modulationseinrichtung unbeeinflussten Datenausgabe sein.

Dabei kann die Ausgaberate bzw. die maximal mögliche Ausgaberate der Datenausgabe-Modulationseinrichtung im ersten und /oder zweiten Modus beispielsweise konstant oder auch Zeit abhängig vorgesehen sein. Die Ausgaberate im ersten Modus kann dabei bezogen auf die mindestens eine weitere Ausgaberate des mindestens einen weiteren Modus der Datenausgabe-Modulationseinrichtung immer reduziert sein, zu einem wesentlichen Teil der Zeit reduziert sein (z.B. mindestens 50% der Zeit) oder auch zeitweise reduziert sein. Weiterhin kann z.B. auch eine maximal mögliche Ausgaberate im ersten Modus gegenüber einer maximal möglichen Ausgaberate im mindestens einen weiteren Modus der Datenausgabe-Modulationseinrichtung reduziert sein.

Dabei kann eine maximal mögliche Ausgaberate der Kommunikationseinrichtung so vorgesehen und eingerichtet sein, dass die Datenausgaberate, insbesondere die jeweils aktuelle Datenausgaberate, bei der Ausgabe von Daten durch die Kommunikationseinrichtung an das angeschlossene Kommunikationsnetz kleiner oder gleich dieser maximalen Datenrate ist. Weiterhin kann z.B. auch die maximal mögliche Ausgaberate der Kommunikationseinrichtung im ersten, im mindestens einen weiteren, im mindestens einen zweiten und/oder im mindestens einen dritten Modus der der Datenausgabe-Modulationseinrichtung derart vorgesehen und eingerichtet sein, dass die Datenausgaberate, insbesondere die jeweils aktuelle Datenausgaberate, bei der Ausgabe von Daten durch die Kommunikationseinrichtung an das angeschlossene Kommunikationsnetz im jeweiligen Modus die vorstehend genannte maximal mögliche Datenausgaberate nicht überschreitet.

Die Erkennungs-Einrichtung kann weiterhin zur Erkennung mindestens eines zumindest unter anderem für unprojektierte Echtzeit-Datenübertragung eingerichteten Automatisierungsnetzes ausgebildet und eingerichtet sein.

Dabei wird unter unprojektierter Echtzeit-Datenübertragung eine Datenübertragung verstanden, bei welcher es keine vorprojektierten (z.B. beim Anlagen-Engineering vorprojektierten), für Echtzeitdaten exklusiv reservierten Zeitbereiche gibt, z.B. keine vorprojektierten (z.B. beim Anlagen-Engineering vorprojektierten), für Echtzeitdaten exklusiv reservierten Zeitbereiche innerhalb eines Übertragungszyklus gibt.

Bei unprojektierter Echtzeit-Datenübertragung ist die Aufteilung der Kommunikation, z.B. eines Übertragungszyklus innerhalb der Kommunikation, in Zeitbereiche für Echtzeit- und Nicht-Echtzeit nicht bereits beim Projektieren des Kommunikationssystems fest vorprojektiert und eingestellt, sondern sie erfolgt im Rahmen der aktiven Verbindungssteuerung im Kommunikationsnetz und/oder im Rahmen der aktiven Verbindungssteuerung abhängig vom anfallenden Volumen der zu übertragenden Daten. Eine projektierte Echtzeit-Datenübertragung liegt beispielsweise in einem Profinet-Netz mit implementierter isochroner Echtzeitübertragung (IRT) vor. Eine unprojektierte Echtzeit-Datenübertragung findet sich beispielsweise in einem Profinet-Netz ohne implementiertes IRT.

Auf diese Weise kann die Kommunikationseinrichtung beispielsweise mit einer geringen oder auch ganz ohne eine Drosselung Daten in das Kommunikations- beziehungsweise Automatisierungsnetz senden, wenn die Echtzeit-Kommunikation fest vorparametriert ist, da damit im Allgemeinen auch die Zeiten für Nicht-Echtzeitkommunikation fest vorgegeben sind und Änderungen bei der Menge von zu übertragenden Nicht-Echtzeit-Daten sich nicht auf die Echtzeitkommunikation auswirken. Bei nicht fest vorprojektierten Systemen kann beispielsweise ein erhöhtes Nicht-Echtzeitdaten-Aufkommen zu einer Behinderung der Echtzeitdatenübertragung führen und dann beispielsweise zu einer Störung einer z.B. über das Automatisierungsnetz gesteuerten Anlage oder Maschine führen.

In einer vorteilhaften Ausgestaltung kann das an die Kommunikationseinrichtung angeschlossene Kommunikationsnetz als Linien-Netzwerk ausgebildet und eingerichtet sein. Solche Liniennetz werden, insbesondere bei kleineren Netzen, relativ häufig verwendet, da man Geräte auf diese Weise mit relativ wenigen Einzelverbindungen auf übersichtliche Weise verbinden kann. Allerdings können solche Liniennetze unter Umständen besonders empfindlich gegen plötzliche Änderungen des anfallende, zu übertragenden Datenvolumens sein, da beispielsweise die Kommunikation zwischen in den Endbereichen liegenden Netzteilnehmern immer über die mittleren Bereiche erfolgen muss und sich so z.B. in den Endbereichen aufkommende, größere Datenübertragungsvolumina, in den Mittelbereichen zu kritischen Datenmengen aufsummieren können.

Weiterhin kann die Erkennungs-Einrichtung der Kommunikationseinrichtung zur Erkennung mindestens eines weiteren Automatisierungsnetz-Typs ausgebildet und eingerichtet sein, wobei die Ausgabe von Daten durch die Kommunikationseinrichtung an das angeschlossene Kommunikationsnetz mittels mindestens eines zweiten Modus der Datenausgabe-Modulationseinrichtung erfolgt, wenn von der Erkennungs-Einrichtung eine Kommunikation gemäß dem mindestens einen weiteren Automatisierungsnetz-Typ erkannt wird. Weiterhin kann vorgesehen sein, dass bei Nicht-Vorliegen des mindestens einen Automatisierungsnetz-Typs oder des mindestens einen weiteren Automatisierungsnetz-Typs die Ausgabe von Daten an das angeschlossene Kommunikationsnetz mittels mindestens eines dritten Modus der Datenausgabe-Modulationseinrichtung erfolgt.

Auf diese Weise kann die Kommunikationseinrichtung variabel zum Anschluss an verschiedene Automatisierungsnetz-Typen eingerichtet werden. Je nach vorliegendem Automatisierungsnetz-Typ, kann dadurch ein geeigneter Modus der Datenausgabe-Modulationseinrichtung ausgewählt werden. Dabei kann der jeweilige Modus wiederum so gewählt sein, dass eine Echtzeitdatenübertragung im jeweiligen Kommunikationsnetz durch die Ausgabe von Daten durch die Kommunikationseinrichtung nicht oder nicht wesentlich gestört wird.

Der mindestens eine dritte Modus der Datenausgabe-Modulationseinrichtung kann einen Modus umfassen, bei welchem die Datenausgabe durch die Kommunikationseinrichtung von der Datenausgabe-Modulationseinrichtung nicht beeinflusst wird.

Die vorstehende Aufgabe wird weiterhin gelöst durch ein Verfahren zur Übertragung von Daten über ein Kommunikationsnetz mit einer Kommunikationseinrichtung gemäß der vorliegenden Beschreibung, wobei dabei die folgenden Verfahrensschritte ablaufen:
a) Analyse der Kommunikation über das an die Kommunikationseinrichtung angeschlossenen Kommunikationsnetzes durch die Erkennungs-Einrichtung,
b) Ausgabe von Daten durch die Kommunikationseinrichtung an ein angeschlossenes Kommunikationsnetz mittels des ersten Modus der Datenausgabe-Modulationseinrichtung, wenn von der Erkennungs-Einrichtung eine Kommunikation gemäß dem mindestens einen Automatisierungsnetz-Typ erkannt wurde,
c) ansonsten Ausgabe von Daten an das angeschlossene Kommunikationsnetz mittels des mindestens einen weiteren Modus der Datenausgabe-Modulationseinrichtung.

Die Analyse der Kommunikation über das an die Kommunikationseinrichtung angeschlossene Kommunikationsnetz kann beispielsweise die Erkennung einer oder mehrerer für den mindestens einen Automatisierungsnetz-Typ charakteristischen Nachrichtentypen und/oder -Formate umfassen. Weiterhin kann die Analyse der Kommunikation über das angeschlossene Kommunikationsnetz die Analyse von Nachrichten (z.B. Protokoll-, Erkennungs-, Anmelde- und/oder Identifikationsnachrichten) auf für den mindestens einen Automatisierungsnetz-Typ charakteristische Inhalte analysiert werden.

Die Erkennungseinrichtung, der erste Modus der Datenausgabe-Modulationseinrichtung, der mindestens einen weiteren Modus der Datenausgabe-Modulationseinrichtung, der Automatisierungsnetz-Typ sowie die Datenausgabe-Modulationseinrichtung können dabei gemäß der vorliegenden Beschreibung ausgebildet und eingerichtet sein.

Weiterhin wird die vorstehend genannte Aufgabe auch durch ein Verfahren gelöst, bei welchem der genannte Verfahrensschritt c) durch nachfolgende Verfahrensschritte ersetzt wird:
d) Ausgabe von Daten durch die Kommunikationseinrichtung an das angeschlossene Kommunikationsnetz mittels mindestens eines zweiten Modus der Datenausgabe-Modulationseinrichtung, wenn von der Erkennungs-Einrichtung eine Kommunikation gemäß dem mindestens einen weiteren Automatisierungsnetz-Typ erkannt wurde, und
e) bei Nicht-Vorliegen des mindestens Automatisierungsnetz-Typs oder auch des mindestens einen weiteren Automatisierungsnetz-Typs, Ausgabe von Daten an das angeschlossene Kommunikationsnetz mittels des mindestens einen dritten Modus der Datenausgabe-Modulationseinrichtung.

Auch hier können wieder der zweite Modus der Datenausgabe-Modulationseinrichtung, der mindestens eine weitere Automatisierungsnetz-Typ sowie der mindestens eine dritte Modus der Datenausgabe-Modulationseinrichtung gemäß der vorliegenden Beschreibung ausgebildet und eingerichtet sein.

Weitere vorteilhafte Ausgestaltungen finden sich in den Unteransprüchen.

Nachfolgend wird die Erfindung beispielhaft mit Bezug auf die beiliegenden Figuren näher erläutert.

Es zeigen:
Fig. 1: Netzwerk mit Automatisierungsgeräten und Office-Geräten;
Fig. 2: Darstellung der Netzwerkkomponenten eines Projektierungs-Computers für die Automatisierungsgeräte in Fig. 1.

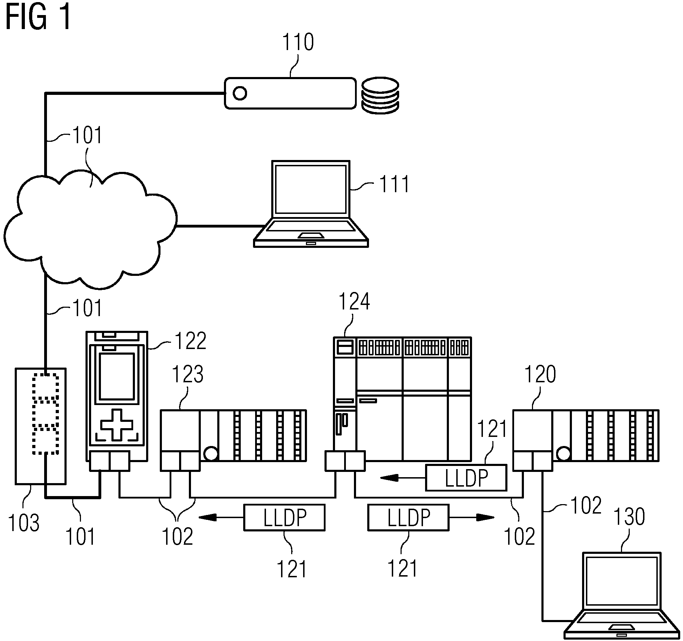

Fig. 1 zeigt die Kombination eines Automatisierungsnetzes 102 und eines Office-Kommunikationsnetzwerks 101. Aus Übersichtlichkeits-Gründen ist nicht jede der Kommunikationsleitungen in Figur 1 mit einem Bezugszeichen versehen. Die Zugehörigkeit zu den genannten Netzen ergibt sich aber aus der entsprechenden Figurenbeschreibung.

Dabei sind vier verschiedene Steuerungseinrichtungen 120, 122, 123, 124 über Kommunikationsleitungen 102 zu einem Automatisierungsnetz 102 verbunden. Ein "Engineering"-Computer 130 zum Einrichten der Steuerungseinheiten 120, 122, 123, 124 ist über eine entsprechende Leitung 102 ebenfalls in das Automatisierungsnetz 102 eingebunden. Dabei ist das Automatisierungsnetz 102 als so genanntes Liniennetz ausgebildet, das heißt, dass die einzelnen Steuereinrichtungen 120, 122, 123, 124, sowie der "Engineering"-Computer 130 kettenförmig über die Kommunikationsleitungen 102 verbunden sind.

Das Automatisierungsnetz 102 ist als Profinet-Netz eingerichtet, wobei isochrone Echtzeitkommunikation (IRT = Isochrones Real Time) nicht implementiert ist und daher auch nicht verwendet wird.

Während des Betriebs des Automatisierungsnetzes 102 senden die einzelnen Netzwerkgeräte 120, 122, 123, 124, 130 in regelmäßigen Zeitabständen Identifikationsnachrichten 121 aus, die als so genannten LLDP-Nachrichten ausgebildet sind (LLDP: Link Layer Discovery Protocol gemäß IEEE 802.1 AB). Anhand dieser Nachrichten können die Geräte 120, 122, 123, 124, 130 im Automatisierungsnetz 102 erkennen, welche anderen Geräte im Automatisierungsnetz 102 vorhanden sind und für welchen Kommunikationsmodus diese eingerichtet sind bzw. welchen Kommunikationsmodus diese verwenden. So kann beispielsweise anhand der LLDP-Nachrichten 121 erkannt werden, dass im Automatisierungsnetz 102 die Kommunikation gemäß Profinet-Standard ohne IRT abläuft.

An das vorderste Steuerungsgerät 122 im Linien-Automatisierungsnetz 102 ist ein Office-Netzwerk 101 angeschlossen, welches als normales "Ethernet" ausgebildet ist. Im Office-Net befindet sich ein Switch 103, ein größeres als Wolke symbolisiertes Datennetzwerk, ein an dieses Netzwerk angeschlossener Computer 111 sowie ein Server 110.

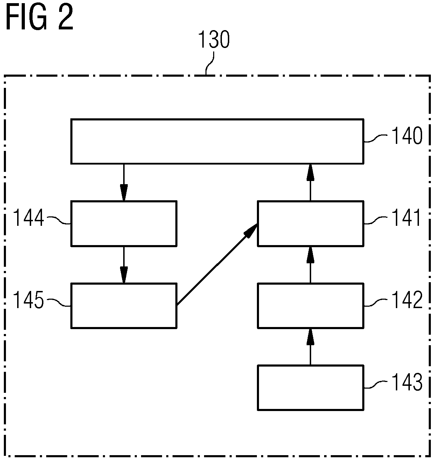

Fig. 2 zeigt eine Darstellung von Kommunikations-Modulen des "Engineering"-Computers 130, der in Fig. 1 bereits dargestellt ist.

Dabei umfasst der "Engineering"-Computer eine Netzwerkkarte 140, welche mit dem Automatisierungsnetz 102 verbunden ist (diese Verbindung ist in Fig. 2 nicht dargestellt). Der "Engineering"-Computer 130 umfasst verschiedene Anwendungen 143, unter anderem zum Einrichten der Steuerungen 120, 122, 123, 124 im Automatisierungsnetz 102. An diese Geräte 120, 122, 123, 124 zu übertragende Daten werden von den Anwendungen 143 zu einem Kommunikations-Stack (IP-Stack) 142 weitergegeben, der diese an eine so genannten "Sendedrossel" 141 bzw. einen sogenannten "Traffic Shaper" 141 weitergibt, von welchem sie dann an die Netzwerkkarte 140 und von dort ans Automatisierungsnetz 102 weitergegeben werden.

Vom Automatisierungsnetz 102 an die Netzwerkkarte 140 kommunizierte Daten werden unter Anderem einem Empfänger für Protokollnachrichten 144 zugeleitet, welcher speziell zur Erkennung der genannten LLDP-Nachrichten 121 ausgebildet und eingerichtet ist, die in Bezug auf Figur 1 bereits erläutert wurden. Erkennt der LLDP-Empfänger 144 eine entsprechende LLDP-Nachricht, so gibt er den Inhalt an eine Erkennungseinrichtung für ein Profinet-Netzwerk ohne IRT 145 weiter. Ergibt die Analyse des LLDP-Datenpakets im Profinet-Erkenner 145, dass das Automatisierungsnetz 102 gemäß dem Profinet-Standard ohne implementiertes IRT ausgebildet ist, so gibt er eine in Abbildung 2 mit einem Pfeil symbolisierte Nachricht an den "Traffic Shaper" 141, welche dann in einen entsprechenden Drosselmodus umschaltet. Dabei wird die Datenrate der von den Applikationen 143 über den IP-Stack 142 kommenden Daten an die Netzwerkkarte 140 derart gedrosselt ausgegeben, dass im Automatisierungsnetz 102 keine ungewöhnlich hohen Datenraten ("Bursts") auftreten.

Die Drosselung der Datenrate kann z.B. die Festlegung einer maximalen Datenrate umfassen, welche dann bei der Ausgabe von Daten im o.g. Drosselmodus nicht überschritten wird. Diese maximale Datenrate kann z.B. fest vorgegeben oder von einem Benutzer eingebbar sein oder auch automatisch ermittelt werden, z.B. anhand des festgestellten Automatisierungsnetzes.

## Patentansprüche

1. Kommunikationseinrichtung (130) zum Anschluss an ein Kommunikationsnetz (101, 102) und zur Übertragung von Daten über das Kommunikationsnetz (101, 102)
mit
- einer Erkennungs-Einrichtung (144, 145) zur Erkennung mindestens eines Automatisierungsnetz-Typs, und
- einem Datenausgabe-Modulationseinrichtung (141) zur Beeinflussung der Datenrate von von der Kommunikationseinrichtung (130) ausgegebenen Daten,
wobei die Kommunikationseinrichtung (130) derart ausgebildet und eingerichtet ist,
- dass die Ausgabe von Daten durch die Kommunikationseinrichtung (130) an ein angeschlossenes Kommunikationsnetz (102) mittels eines ersten Modus der Datenausgabe-Modulationseinrichtung (141) erfolgt, wenn von der Erkennungs-Einrichtung (144, 145) eine Kommunikation gemäß dem mindestens einen Automatisierungsnetz-Typ erkannt wird,
und
- dass ansonsten die die Ausgabe von Daten an das angeschlossene Kommunikationsnetz (102) mittels mindestens eines weiteren Modus der Datenausgabe-Modulationseinrichtung (141) erfolgt.

2. Kommunikationseinrichtung gemäß Anspruch 1,
**dadurch gekennzeichnet,**
**dass** die Erkennungs-Einrichtung (144, 145) zur Erkennung und/oder Analyse von über das angeschlossene Kommunikationsnetz (102) kommunizierten Kommunikationsnachrichten (121) ausgebildet und eingerichtet ist.

3. Kommunikationseinrichtung gemäß einem der vorstehenden Ansprüche,
**dadurch gekennzeichnet,**
**dass** im ersten Modus der Datenausgabe-Modulationseinrichtung (141) eine Ausgaberate von an das angeschlossene Kommunikationsnetz (102) ausgegebene Daten vorgesehen ist, welche gegenüber mindestens einer weiteren Ausgaberate des mindestens einen weiteren Modus der Datenausgabe-Modulationseinrichtung (141) reduziert ist.

4. Kommunikationseinrichtung gemäß einem der vorstehenden Ansprüche,
**dadurch gekennzeichnet,**
**dass** im ersten Modus der Datenausgabe-Modulationseinrichtung (141) eine maximal mögliche Ausgaberate von an das angeschlossene Kommunikationsnetz (102) ausgegebene Daten vorgesehen ist, welche gegenüber mindestens einer weiteren maximal möglichen Ausgaberate des mindestens einen weiteren Modus der Datenausgabe-Modulationseinrichtung (141) reduziert ist.

5. Kommunikationseinrichtung gemäß einem der vorstehenden Ansprüche,
**dadurch gekennzeichnet,**
**dass** die Erkennungs-Einrichtung (144, 145) zur Erkennung mindestens eines für unprojektierte Echtzeit-Datenübertragung eingerichteten Automatisierungsnetzes ausgebildet und eingerichtet ist.

6. Kommunikationseinrichtung gemäß einem der vorstehenden Ansprüche,
**dadurch gekennzeichnet,**
**dass** das angeschlossene Kommunikationsnetz (102) als Linien-Netzwerk ausgebildet und eingerichtet ist.

7. Kommunikationseinrichtung gemäß einem der vorstehenden Ansprüche,
**dadurch gekennzeichnet, dass**
- die Erkennungs-Einrichtung (144, 145) zur Erkennung mindestens eines weiteren Automatisierungsnetz-Typs ausgebildet und eingerichtet ist, und
- die Ausgabe von Daten durch die Kommunikationseinrichtung (130) an das angeschlossene Kommunikationsnetz (102) mittels mindestens eines zweiten Modus der Datenausgabe-Modulationseinrichtung (141) erfolgt, wenn von der Erkennungs-Einrichtung (144, 145) eine Kommunikation gemäß dem mindestens einen weiteren Automatisierungsnetz-Typ erkannt wird, und
- bei Nicht-Vorliegen des mindestens einen Automatisierungsnetz-Typs oder des mindestens einen weiteren Automatisierungsnetz-Typs die Ausgabe von Daten an das angeschlossene Kommunikationsnetz (102) mittels mindestens eines dritten Modus der Datenausgabe-Modulationseinrichtung (141) erfolgt.

8. Verfahren zur Übertragung von Daten über ein Kommunikationsnetz (102) mit einer Kommunikationseinrichtung (130) gemäß einem der vorstehenden Ansprüche,
**gekennzeichnet durch** die Verfahrensschritte:
a.) Analyse der Kommunikation über das an die Kommunikationseinrichtung (130) angeschlossen Kommunikationsnetzes (102) **durch** die Erkennungs-Einrichtung (144, 145),
b.) Ausgabe von Daten **durch** die Kommunikationseinrichtung (130) an das angeschlossene Kommunikationsnetz (102) mittels des ersten Modus der Datenausgabe-Modulationseinrichtung (141), wenn von der Erkennungs-Einrichtung (144, 145) eine Kommunikation gemäß dem mindestens einen Automatisierungsnetz-Typ erkannt wurde,
c.) ansonsten Ausgabe von Daten an das angeschlossene Kommunikationsnetz (102) mittels des mindestens einen weiteren Modus der Datenausgabe-Modulationseinrichtung (141).

9. Verfahren gemäß Anspruch 8,
**dadurch gekennzeichnet,**
**dass** die Kommunikationseinrichtung (130) gemäß Anspruch 7 ausgebildet und eingerichtet ist, und
**dass** anstatt Verfahrensschritt c.) nachfolgende Verfahrensschritte ablaufen:
d.) Ausgabe von Daten durch die Kommunikationseinrichtung (130) an das angeschlossene Kommunikationsnetz (102) mittels mindestens eines zweiten Modus der Datenausgabe-Modulationseinrichtung (141), wenn von der Erkennungs-Einrichtung eine Kommunikation gemäß dem mindestens einen weiteren Automatisierungsnetz-Typ erkannt wurde, und
e.) bei Nicht-Vorliegen des mindestens einen Automatisierungsnetz-Typs oder des mindestens einen weiteren Automatisierungsnetz-Typs, Ausgabe von Daten an das angeschlossene Kommunikationsnetz (102) mittels mindestens eines dritten Modus der Datenausgabe-Modulationseinrichtung (141) .
